# FASCICULE DE BREVET EUROPEEN

(11) **EP 3 859 450 B1**
(45) Date de publication et mention de la délivrance du brevet: **15.10.2025**
(21) Numéro de dépôt: 20154404.6
(22) Date de dépôt: 29.01.2020
(51) Int. Cl.: G04B 19/04, G04C 17/00, G04G 21/08

(54) **SYSTEME D'AFFICHAGE**
ANZEIGESYSTEM
DISPLAY SYSTEM

(43) Date de publication de la demande: 04.08.2021
(73) Titulaire: ETA SA Manufacture Horlogère Suisse, 2540 Grenchen (CH)
(72) Inventeur: LAGORGETTE, Pascal, 2502 Bienne (CH); BESUCHET, Romain, 1400 Yverdon-les-Bains (CH); BALMER, Raphaël, 2824 Vicques (CH); STEHLIN, Xavier, 1588 Cudrefin (CH)
(74) Mandataire: ICB SA

(56) Documents cités:
- EP-A1- 3 321 748
- WO-A2-02/46846
- US-A1- 2018 039 232
- US-B2- 8 908 477

## Description

### Domaine technique

La présente invention concerne celui de l'horlogerie, et plus précisément celui des systèmes d'affichage permettant d'afficher des informations sur un cadran. Préférentiellement, la présente invention concerne le domaine des indicateurs de montre et de préférence les indicateurs de montre connectée.

### Arrière-plan technologique

Ces dernières années ont connu l'essor des montres électroniques et plus particulièrement des montres comprenant un dispositif de pointage capacitif ou inductif.

EP 3321748 A1 dévoile une montre intelligente comprenant un module d'affichage au dessus duquel deux aiguilles latérales indiquent l'heure, un module haptique étant localisé sur le verre de montre. Les aiguilles sont disposées en dessous du module haptique 15c compris dans le module d'affichage 15a dans une zone périphérique.

L'utilisateur peut indiquer une fonction qu'il souhaite activer en réalisant un contact avec l'écran par effleurement ou par touché, ce qui engendre une modification du champ capacitif ou inductif.

Cette modification du champ est perturbée par les aiguilles qui se trouvent tout près de l'écran.

Les solutions existantes proposent d'augmenter la tension ou le courant afin d'être moins sensible aux perturbations, ce qui fatalement mène à une augmentation de la consommation de l'énergie électrique et donc réduit l'autonomie de la montre électronique.

### Résumé de l'invention

La présente invention se propose de résoudre tout ou partie des inconvénients mentionnés ci-avant par l'intermédiaire d'un système d'affichage pour une montre comprenant au moins :
- un dispositif d'affichage ; ledit au moins un dispositif d'affichage étant configuré pour afficher une information ;
- un dispositif de pointage ; ledit au moins un dispositif de pointage, de préférence capacitif ou inductif, étant disposé au-dessus dudit au moins un dispositif d'affichage ; ledit au moins un dispositif d'affichage et ledit au moins un dispositif de pointage définissant une zone de recouvrement permettant à l'utilisateur de pointer sur ledit au moins un dispositif de pointage ladite information dudit au moins un dispositif d'affichage ;
- un élément mobile ; ledit au moins un élément mobile étant disposé totalement ou partiellement au-dessus dudit au moins un dispositif d'affichage et en périphérie de ladite zone de recouvrement, ledit au moins un élément mobile étant configuré pour être mobile autour de ladite zone de recouvrement.

Selon l'invention, ledit au moins un élément mobile est exclu de ladite zone de recouvrement. Grâce à cette disposition, ledit au moins un élément mobile ne peut interférer avec le champ capacitif ou inductif dudit au moins un dispositif de pointage.

Selon un mode de réalisation, ladite zone de recouvrement comprend au moins 60%, de préférence au moins 85%, notamment 95% dudit au moins un dispositif d'affichage.

Grâce à cette disposition, ladite zone de recouvrement ne recouvre que partiellement ledit au moins un dispositif d'affichage, ce qui laisse un espace pour ledit au moins un élément mobile.

Selon un mode de réalisation, ledit au moins un élément mobile est un indicateur, de préférence une aiguille.

### Brève description des figures

L'invention sera décrite ci-après de manière plus détaillée à l'aide des dessins annexés, donnés à titre d'exemples nullement limitatifs, dans lesquels :
- La figure 1 illustre une montre comprenant un système d'affichage selon un mode de réalisation de l'invention ;
- La figure 2 présente une vue en coupe du système d'affichage du mode de réalisation de la figure 1.

### Description détaillée de l'invention

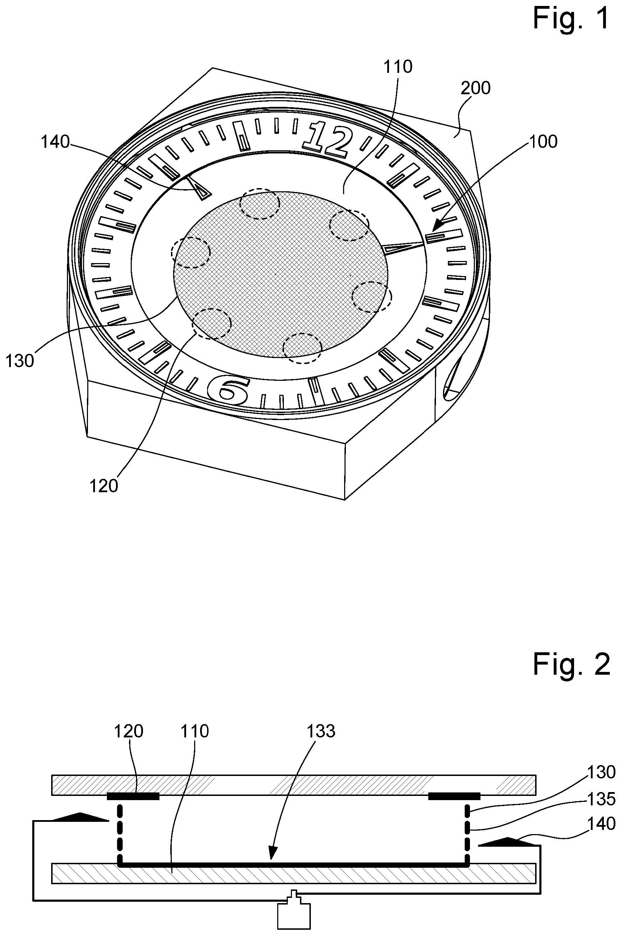

La figure 1 représente une montre **200** avec un système d'affichage **100** selon l'invention. Ledit système d'affichage **100** pour ladite montre **200** dispose d'au moins un dispositif d'affichage **110,** de préférence LCD voire OLED, configuré pour afficher une information, d'au moins un dispositif de pointage **120,** de préférence capacitif ou inductif selon les modes de réalisation, disposé au-dessus dudit au moins un dispositif d'affichage. Ledit au moins un dispositif d'affichage **110** et ledit au moins un dispositif de pointage **120** définissent une zone de recouvrement **130,** représentant au moins 60%, de préférence au moins 85%, notamment 95% dudit au moins un dispositif d'affichage **110,** permettant à l'utilisateur de pointer sur ledit au moins un dispositif de pointage **120** ladite information dudit au moins un dispositif d'affichage **110,** comme cela est représenté sur la figure 2.

En effet, ladite zone de recouvrement **130** définit un affichage **133** compris entre ledit au moins un dispositif d'affichage **110** et ledit au moins un dispositif de pointage **120** permettant à l'utilisateur de sélectionner une ou plusieurs fonctions ou informations qui seraient affichés.

À cela s'ajoute au moins un élément mobile **140,** pouvant prendre la forme d'un indicateur, de préférence d'une aiguille **140,** et étant mobile autour de ladite zone de recouvrement **130.** Ledit au moins un élément mobile **140** peut être disposé totalement ou partiellement au-dessus dudit au moins un dispositif d'affichage **110** et en périphérie dudit au moins un dispositif de pointage **120** de manière à être en périphérie de ladite zone de recouvrement **130,** comme cela est représenté sur les figures 1 et 2. Ainsi ledit au moins un élément mobile **140** ne peut pas interférer avec le champ capacitif ou inductif dudit au moins un dispositif de pointage **120.**

Ledit au moins un élément mobile **140** est exclu de ladite zone de recouvrement **130** de sorte à éviter que ledit au moins un élément mobile **140** n'interfère avec le champ capacitif ou inductif dudit au moins un dispositif de pointage **120.**

Ainsi, l'utilisateur peut indiquer une fonction qu'il souhaite activer en réalisant un contact avec ledit au moins un dispositif de pointage **120** par effleurement ou par touché, ce qui n'engendre pas ou peu de modification du champ capacitif ou inductif.

Par ailleurs, le système d'affichage **100** selon l'invention permet de diminuer la consommation d'énergie électrique et donc augmente l'autonomie de la montre électronique.

## Revendications

1. Montre (200) comprenant un système d'affichage (100) qui comprend au moins :
- un dispositif d'affichage (110) ; ledit au moins un dispositif d'affichage étant configuré pour afficher une information ;
- un dispositif de pointage (120) ; ledit au moins un dispositif de pointage, de préférence capacitif ou inductif, étant disposé au-dessus dudit au moins un dispositif d'affichage (110), ledit au moins un dispositif d'affichage et ledit au moins un dispositif de pointage (120) définissant une zone de recouvrement (130) permettant à un utilisateur de pointer sur ledit au moins un dispositif de pointage ladite information dudit au moins un dispositif d'affichage ;
- un élément mobile (140) ; ledit au moins un élément mobile étant disposé totalement ou partiellement au-dessus dudit au moins un dispositif d'affichage (110) ;
**caractérisée en ce que** ledit au moins un élément mobile (140) est disposé totalement en périphérie de ladite zone de recouvrement (130) et est configuré pour être mobile autour de cette zone de recouvrement.

2. Montre selon la revendication 1, dans lequel ladite zone de recouvrement (130) comprend au moins 60%, de préférence au moins 85%, notamment 95% dudit au moins un dispositif d'affichage (110).

3. Montre selon la revendication 1 ou 2, dans lequel ledit au moins un élément mobile (140) est un indicateur (140), de préférence une aiguille (140).

## Patentansprüche

1. Uhr (200) mit einem Anzeigesystem (100), das mindestens Folgendes umfasst:
- eine Anzeigevorrichtung (110), wobei die mindestens eine Anzeigevorrichtung so ausgebildet ist, dass sie eine Information anzeigt;
- eine Zeigevorrichtung (120), wobei die mindestens eine Zeigevorrichtung, vorzugsweise kapazitiv oder induktiv, oberhalb der mindestens einen Anzeigevorrichtung (110) angeordnet ist, wobei die mindestens eine Anzeigevorrichtung (110) und die mindestens eine Zeigevorrichtung (120) einen Überlappungsbereich (130) definieren, der es einem Benutzer ermöglicht, in Bezug auf die mindestens eine Anzeigevorrichtung (110) über die Zeigevorrichtung (120) auf die angezeigte Information zu zeigen;
- ein bewegliches Element (140), wobei das mindestens ein bewegliches Element vollständig oder teilweise oberhalb der mindestens einen Anzeigevorrichtung (110) angeordnet ist;
wobei das mindestens ein bewegliches Element (140) vollständig am Rand des Überlappungsbereichs (130) angeordnet ist und so konfiguriert ist, dass es um diesen Überlappungsbereich (130) beweglich ist.

2. Uhr nach Anspruch 1, wobei der Überlappungsbereich (130) mindestens 60 %, vorzugsweise mindestens 85 % und insbesondere 95 % der Fläche der mindestens einen Anzeigevorrichtung (110) umfasst.

3. Uhr nach Anspruch 1 oder 2, wobei das mindestens ein bewegliches Element (140) ein Anzeiger (140) ist, vorzugsweise ein Zeiger (140).

## Claims

1. A watch (200) comprising a display system (100) which comprises at least:
- a display device (110); said at least a display device being configured to display an item of information ;
- a pointing device (120) ; said at least a pointing device, preferably capacitive or inductive, being disposed above said at least a display device (110), said at least a display device and said at least a pointing device (120) defining an overlap zone (130) allowing a user to point on said at least a pointing device to said item of information of said at least a display device ;
- a movable element (140); said at least a movable element being disposed completely or partially above said at least a display device (110).
**characterised in that** said at least a movable element (140) is disposed completely at the periphery of said overlap zone (130) and is configured to be movable around this overlap zone.

2. Watch according to claim 1, wherein said overlap zone (130) comprises at least 60%, preferably at least 85%, particularly 95% of said at least a display device (110).

3. Watch according to claim 1 or 2, wherein said at least a movable element (140) is an indicator (140), preferably a hand (140).
